(19)

Europäisches
Patentamt
European
Patent Office
Office européen
des brevets

(11)     **EP 4 518 205 A1**

(12)     **EUROPEAN PATENT APPLICATION**
published in accordance with Art. 153(4) EPC

(43) Date of publication:
**05.03.2025   Bulletin 2025/10**

(21) Application number: **23796835.9**

(22) Date of filing: **27.04.2023**

(51) International Patent Classification (IPC):
*H04L 1/00* (2006.01)        *H04W 72/232* (2023.01)
*H04W 72/12* (2023.01)        *H04L 5/00* (2006.01)
*H04W 72/23* (2023.01)

(52) Cooperative Patent Classification (CPC):
**H04L 1/00; H04L 5/00; H04W 72/12; H04W 72/23; H04W 72/232**

(86) International application number:
**PCT/KR2023/005770**

(87) International publication number:
**WO 2023/211193 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **27.04.2022  KR 20220052012
06.04.2023  KR 20230045619**

(71) Applicant: **LG Electronics Inc.**
**Yeongdeungpo-gu**
**Seoul 07336 (KR)**

(72) Inventors:
• **YANG, Suckchel**
  **Seoul 06772 (KR)**
• **CHOI, Seunghwan**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54)     **METHOD AND APPARATUS FOR TRANSMITTING AND RECEIVING SIGNAL IN WIRELESS COMMUNICATION SYSTEM**

(57)     According to at least one of various embodiments, UE may receive, via a PDCCH, DCI including at least one FDRA field and at least one MCS field and transmit an HARQ-ACK codebook on the basis of the DCI. The DCI may support multi-cell scheduling on the basis of a plurality of cells configured in the UE, and on the basis that a first FDRA field for a first cell, included in the DCI is set, for the first cell, to a specific value other than a valid FDRA value, an index of the HARQ-ACK codebook may be determined via a first MCS field for the first cell, included in the DCI.

**FIG. 10**

- Enhanced Type-3 codebook Index List

| Enhanced Type-3 codebook Index | Cells |
|---|---|
| 1 | {Cell A, Cell B, Cell C} |
| 2 | {Cell A, Cell C, Cell D, Cell E} |
| ... | ... |

- Multi-cell DCI

| DCI field | Value |
|---|---|
| ... | ... |
| 1st FDRA | Valid |
| 2nd FDRA | Invalid |
| ... | ... |
| ... | ... |
| MCS 1 | 1st value |
| MCS 2 | 2nd value |
| ... | ... |

EP 4 518 205 A1

**Description**

[Technical Field]

The present disclosure relates to a wireless communication system, and more particularly, to a method and apparatus for transmitting or receiving a downlink/uplink radio signal in a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

In one aspect of the present disclosure, a method of receiving a signal by a user equipment (UE) in a wireless communication system may include receiving, through a physical downlink control channel (PDCCH), downlink control information (DCI) including at least one frequency domain resource allocation (FDRA) field and at least one modulation and coding scheme (MCS) field), and transmitting a hybrid automatic repeat request-acknowledgement (HARQ-ACK) codebook based on the DCI. The DCI may support multi-cell scheduling based on a plurality of serving cells configured in the UE. Based on that a first FDRA field for a first cell included in the DCI is set to a specific value other than a valid FDRA value for the first cell, an index of the HARQ-ACK codebook may be determined through a first MCS field for the first cell included in the DCI).

The HARQ-ACK codebook may be a type-3 HARQ-ACK codebook related to at least a part of the plurality of cells.

The index of the HARQ-ACK codebook may be related to at least one of cell information or HARQ process ID information for the type-3 HARQ-ACK codebook.

The UE may skip receiving a physical downlink shared channel (PDSCH) for the first cell allocated with the specific value other than the valid FDRA value among the plurality of cells.

The UE may receive the PDSCH based on the DCI on each of one or more cells other than the first cell among the plurality of cells.

Based on transmission of a type-3 HARQ-ACK codebook is requested to the UE through the DCI, index information related the type-3 HARQ-ACK codebook may be determined through the first MCS field for the first cell included in the DCI.

Based on transmission of a type-3 HARQ-ACK codebook is requested to the UE through the DCI, the UE may skip receiving a physical downlink shared channel (PDSCH) for the first cell as well as for the other cells of the plurality of cells.

The first cell may be a cell having a lowest or highest serving cell index among the plurality of cells.

The DCI may include includes a FDRA field and a MCS field for each of co-scheduled cells.

In another aspect of the present disclosure, a processor-readable recording medium may be provided that has recorded thereon a program to execute the method described above.

In another aspect of the present disclosure, a user equipment for performing the method described above may be provided.

In another aspect of the present disclosure, a device for controlling a user equipment executing the method described above may be provided.

In another aspect of the present disclosure, a method of transmitting a signal by a base station in a wireless communication system may include transmitting, through a physical downlink control channel (PDCCH), downlink control information (DCI) including at least one frequency domain resource allocation (FDRA) field and at least one modulation and coding scheme (MCS) field to a user equipment (UE), and receiving a hybrid automatic repeat request-acknowledgement (HARQ-ACK) codebook from the UE based on the DCI. The DCI may support multi-cell scheduling based on a plurality of cells configured in the UE. Based on that a first FDRA field for a first cell included in the DCI is set to a specific value other than a valid FDRA value for the first cell, an index of the HARQ-ACK codebook may be indicated through a first MCS field for the first cell included in the DCI.

In another aspect of the present disclosure, a base station a base station for performing the method described above may be provided.

[Advantageous Effects]

According to at least one of various embodiments wireless signal transmission/reception procedures can be performed efficiently.

It will be appreciated by persons skilled in the art that the technical effects that could be achieved with the present disclosure are not limited to what has been particularly described hereinabove and the above and other technical effects that the present disclosure could achieve will be more clearly understood from the following detailed description.

[Description of Drawings]

FIG. 1 illustrates physical channels used in a 3rd generation partnership project (3GPP) system as an exemplary wireless communication system, and a general signal transmission method using the same;

FIG. 2 illustrates a radio frame structure;

FIG. 3 illustrates a resource grid of a slot;

FIG. 4 illustrates exemplary mapping of physical channels in a slot;

FIG. 5 illustrates an exemplary PDCCH/PDSCH reception and acknowledgment/negative acknowledgment (ACK/-NACK) transmission process;

FIG. 6 illustrates an exemplary physical uplink shared channel (PUSCH) transmission process;

FIG. 7 illustrates an example of carrier aggregation;

FIG. 8 illustrates an exemplary wireless communication system supporting an unlicensed band;

FIG. 9 illustrates a method of occupying resources within an unlicensed band;

FIG. 10 is a diagram illustrating Enhanced Type 3 codebook transmission according to one embodiment;

FIG. 11 is a diagram illustrating HARQ-ACK codebook retransmission according to one embodiment;

FIG. 12 is a diagram illustrating a method of receiving a signal by a UE according to one embodiment;

FIG. 13 is a diagram illustrating a method of transmitting a signal by a BS according to one embodiment;

FIGS. 14 to 17 illustrate a communication system 1 and wireless devices applicable to the present disclosure; and

FIG. 18 illustrates a discontinuous reception (DRX) operation applicable to the present disclosure.

[Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

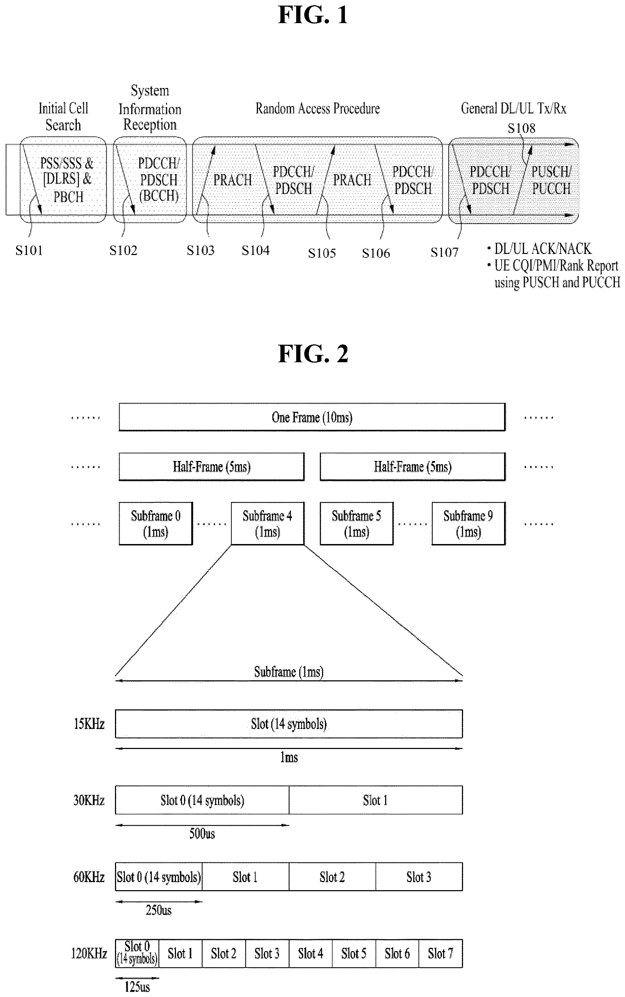

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC_INACTIVE, SCell time alignment, system information request, beam failure recovery, or UL resource request. However, the random access procedure is not limited thereto. The UE may acquire UL synchronization and/or UL transmission resources from the random access procedure.

FIG. 2 illustrates a radio frame structure. In NR, uplink and downlink transmissions are configured with frames.

Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

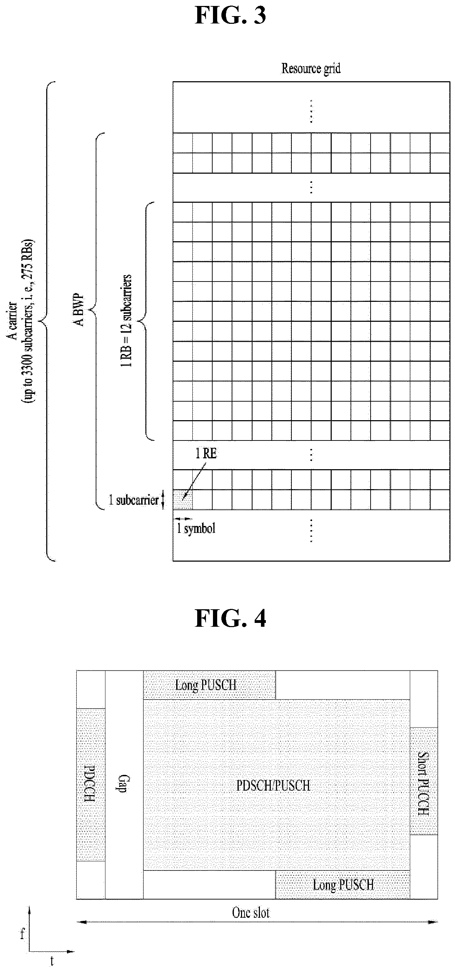

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters

- controlResourceSetId: A CORESET related to an SS
- monitoringSlotPeriodicityAndOffset: A PDCCH monitoring periodicity (in slots) and a PDCCH monitoring offset (in slots)
- monitoringSymbolsWithinSlot: PDCCH monitoring symbols in a slot (e.g., the first symbol(s) of a CORESET)
- nrofCandidates: The number of PDCCH candidates (one of 0, 1, 2, 3, 4, 5, 6, and 8) for each AL={1, 2, 4, 8, 16}

  * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |

(continued)

| DCI format | Usage |
|---|---|
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Numb er of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |

(continued)

| PUCCH format | Length in OFDM symbols $N_{symb}^{PUCCH}$ | Numb er of bits | Usage | Etc |
|---|---|---|---|---|
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one8 of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

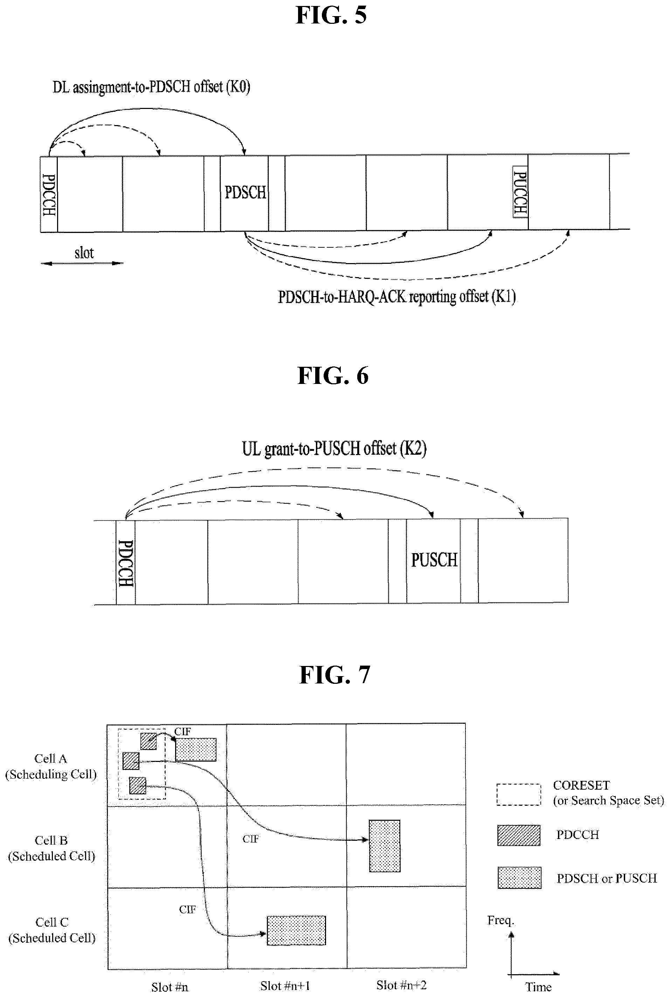

FIG. 5 illustrates an exemplary PDCCH/PDSCH reception and ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There is a plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

HARQ-ACK codebooks are defined as Type-1, Type-2, and Type-3 codebook types depending on how the HARQ-ACK bits (payload) are configured. For the Type-1 codebook, the HARQ-ACK payload is configured according to a combination of a candidate HARQ-ACK timing (K1) set and a candidate PDSCH occasions (SLIV) set (configured for each cell) (e.g., a codebook having a size semi-statically fixed based on RRC signaling). For the Type-2 codebook, the codebook size may change dynamically depending on the number of PDSCHs being actually scheduled or the number of corresponding resource allocations (e.g., downlink assignment index (DAI)). For the Type-3 codebook, the HARQ-ACK payload is configured by mapping the HARQ-ACK bits corresponding to each HARQ process number (HPN) to the corresponding HPN according to the maximum number of HARQ process(es) (set for each cell) (e.g., one-shot A/N reporting). Recently, the NR standard added an Enhanced Type-3 codebook as a form of the Type-3 codebook. The Enhanced Type-3 codebook is intended to report HARQ-ACK bits for subset cells indicated to the BS among all cells, rather than reporting HARQ-ACK bits for all cells at once, in order to reduce signaling overhead. Through higher layer signaling of the Enhanced Type-3 codebook indexes, subsets of cells related to the Enhanced Type-3 codebook may be configured for the UE, and one of the configured subsets (e.g., enhanced Type-3 codebook indexes) may then be indicated to the UE by DCI triggering the enhanced Type-3 codebook. The UE may report HARQ-ACK for cells belonging to the indicated subset. Depending on the configuration of the enhanced Type-3 codebook indexes, the enhanced Type-3 codebook may be configured not only at the per Cell level, but also at the per HARQ process level. For example, an enhanced Type-3 codebook index may be configured on a per HARQ process basis to support reporting the Type-3 codebook for a portion of the HARQ processes in a cell.

Specifically, for Type-1 codebooks, a set of multiple (e.g., N) candidate values of K1 (for a corresponding cell among the cells) may be configured. For each value of K1, a combination of all SLIVs that are transmittable (or may be scheduled to be transmitted) within a DL slot K1 slots before the A/N transmission slot may be computed, and an A/N sub-payload corresponding to the DL slot (including determination of the A/N bit position/sequence corresponding to each transmittable SLIV within the slot) may be configured (which is defined as "SLIV Pruning"). Such A/N sub-payloads may be concatenated for N values of K1 to configure a complete A/N codebook, where the set of (N) DL slots corresponding to each value of K1 may be defined as a bundling window corresponding to the A/N transmission slot.

For the Type-2 HARQ-ACK codebook, a codebook to transmit HARQ-ACK information on the same PUCCH/-PUSCH is defined based on the values of the counter downlink assignment indicator (DAI) (C-DAI) and total DAI (T-DAI) indicated in the actually transmitted PDCCH. In other words, a codebook is configured based on the PDCCH information actually transmitted to the UE. In the case where the UE fails to detect a specific PDCCH, a NACK is transmitted by the bit for the PDCCH among the bits defined in the codebook. At this time, the UE may recognize the status of the PDCCH detection failure based on the values of the C-DAI and T-DAI. The C-DAI is the cumulative number of {serving cell index, PDCCH monitoring occasion}-pairs through which PDSCH receptions are provided, counted up to the current serving cell and current PDCCH monitoring occasion. First, for multiple PDSCH receptions for the same {serving cell index, PDCCH monitoring occasion}-pair, the PDSCH that starts to be received is counted first (assigned a lower C-DAI value). Next, when there are multiple pairs having the same PDCCH monitoring occasion index among different {serving cell index, PDCCH monitoring occasion}-pairs, the pair with the lower serving cell index is counted first. Next, when there are multiple pairs with the same serving cell index among the different {serving cell index, PDCCH monitoring occasion }-pairs, the PDCCH monitoring occasion with the lower index is counted first.

Specifically, for the Type-3 codebook, one of two modes may be configured by the BS for the UE: Mode 1, where the HARQ-ACK and the corresponding NDI are fed back together, and Mode 2, where only the HARQ-ACK is fed back without the NDI. When set in Mode 1, the UE shall operate to feedback the HARQ-ACK for PDSCH reception of the corresponding one of the HARQ process numbers (HPNs) and the corresponding NDI (indicated through the DCI) together. On the other hand, when set in Mode 2, the UE shall only feedback the HARQ-ACK for PDSCH reception of the corresponding one of the HPNs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information

- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

Carrier aggregation

NR may support a wider UL/DL bandwidth by aggregating multiple UL and DL carriers (i.e., carrier aggregation). Carrier aggregation allows signals to be transmitted/received on multiple carriers. When carrier aggregation is applied, each carrier (see FIG. A2) may be referred to as a component carrier (CC). The CCs may be adjacent or non-adjacent to each other in the frequency domain. The bandwidth of each CC may be determined independently. Asymmetric carrier aggregation, where the number of UL CCs is different from the number of DL CCs, may also be performed.

- Primary Cell (PCell): A cell operating at a primary frequency (e.g., primary component carrier (PCC)) at which a UE for which carrier aggregation is configured performs an initial connection establishment procedure or initiates a connection re-establishment procedure. In the case of dual connectivity (DC), a master cell group (MCG) cell operating at a primary frequency at which the UE performs the initial connection establishment procedure or initiates the connection re-establishment procedure.
- Secondary Cell (SCell): A cell that provides additional radio resources, other than a special cell for a UE for which carrier aggregation is configured.
- Primary SCG Cell (PSCell): A secondary cell group (SCG) cell in which the UE performs random access when performing an RRC reconfiguration and synchronization procedure in the case of DC.
- Special Cell (SpCell): In the case of DC, the SpCell represents the PCell of the MCG or the PSCell of the SCG. In the other case (i.e., the case of non-DC), the SpCell represents a PCell.
- Serving Cell (ServCell): Represents a cell configured for a UE in an RRC_CONNECTED state. When CA/DA is not configured, only one serving cell (i.e., PCell) is present. When CA/DA is configured, the serving cell represents a cell set including the SpCell(s) and all SCells.

The control information may be configured to be transmitted/received only through an SpCell. For example, UCI may be transmitted only through an SpCell (e.g., PCell). When an SCell in which PUCCH transmission is allowed (hereinafter, PUCCH-SCell) is configured, UCI may be transmitted even through the PUCCH-SCell. As another example, the BS may allocate a scheduling cell (set) in order to lower the complexity of the PDCCH blinding decoding (BD) at the UE side. For PDSCH reception/PUSCH transmission, the UE may perform PDCCH detection/decoding only in the scheduling cell. In addition, the BS may transmit the PDCCH only through the scheduling cell (set). For example, the PDCCH for downlink allocation may be transmitted in cell #0 (i.e., a scheduling cell), and the corresponding PDSCH may be transmitted in cell #2 (i.e., a scheduled cell) (Cross-Carrier Scheduling (CCS)). The scheduling cell (set) may be configured in a UE-specific, UE-group-specific or cell-specific manner. The scheduling cell includes a SpCell (e.g., PCell).

For Cross-Carrier Scheduling, a carrier indicator field (CIF) is used. The CIF may be disabled/enabled semi-statically by UE-specific (or UE group-specific) higher-layer signaling (e.g., RRC signaling). The CIF is an x-bit field (e.g., x=3) in the PDCCH (i.e., DCI) and may be used to indicate the (serving) cell index for the scheduled cell.

- CIF disabled: The CIF is not present in the PDCCH. The PDCCH in the scheduling cell allocates PDSCH/PUSCH resources in the same cell. That is, the scheduling cell is the same as the scheduled cell.

- CIF enabled: The CIF is present in the PDCCH. The PDCCH in the scheduling cell may allocate PDSCH/PUSCH resources in one of a plurality of cells using the CIF. The scheduling cell may be the same as or different from the scheduled cell. A PDSCH/PUSCH means a PDSCH or a PUSCH.

FIG. 7 illustrates carrier aggregation. In FIG. 7, it is assumed that three cells are aggregated. When the CIF is disabled, only a PDCCH that schedules a PDSCH/PUSCH for each cell may be transmitted in each cell (self-carrier scheduling (SCS)). On the other hand, when the CIF is enabled by UE-specific (or UE group-specific or cell-specific) higher-layer signaling, and cell A is configured as a scheduling cell, a PDCCH that schedules a PDSCH/PUSCH in the other cell (i.e., the scheduled cell) as well as a PDCCH that schedules a PDSCH/PUSCH for cell A may be transmitted in cell A (cross-carrier scheduling (CCS)). In this case, the PDCCH that schedules a PDSCH/PUSCH for cell B/C is transmitted in cell B/C.

## NR-shared spectrum/unlicensed band (NR-U) operation

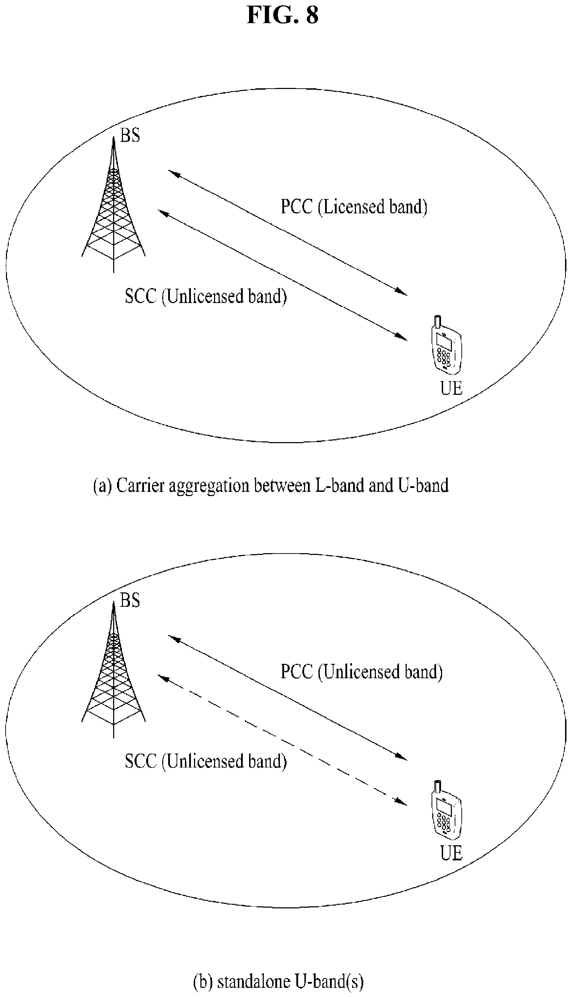

FIG. 8 illustrates a wireless communication system supporting an unlicensed band. For convenience, a cell operating in a licensed band (hereinafter, L-band) is defined as an LCell and a carrier of the LCell is defined as a (DL/UL) LCC. A cell operating in an unlicensed band (hereinafter, U-band) is defined as a UCell and a carrier of the UCell is defined as a (DL/UL) UCC. A carrier of a cell may represent an operating frequency (e.g., a center frequency) of the cell. A cell/carrier (e.g., CC) may generically be referred to as a cell.

When carrier aggregation is supported, one UE may transmit and receive signals to and from a BS in a plurality of aggregated cells/carriers. If a plurality of CCs is configured for one UE, one CC may be configured as a primary CC (PCC) and the other CCs may be configured as secondary CCs (SCCs). Specific control information/channels (e.g., a CSS PDCCH and PUCCH) may be configured to transmit and receive signals only in the PCC. Data may be transmitted and received in the PCC and/ or the SCCs. In FIG. 8(a), the UE and the BS transmit and receive signals in the LCC and the UCC (non-standalone (NSA) mode). In this case, the LCC may be configured as the PCC and the UCC may be configured as the SCC. If a plurality of LCCs is configured for the UE, one specific LCC may be configured as the PCC and the other LCCs may be configured as the SCCs. FIG. 8(a) corresponds to LAA of the 3GPP LTE system. FIG. 8(b) illustrates the case in which the UE and the BS transmit and receive signals in one or more UCCs without the LCC (SA mode). In this case, one of the UCCs may be configured as the PCC and the other UCCs may be configured as the SCCs. To this end, PUCCH, PUSCH, PRACH transmission can be supported. Both the NSA mode and the SA mode may be supported in an unlicensed band of the 3GPP NR system.

Unless otherwise mentioned, the definitions below are applicable to terms as used in the present disclosure

- Channel: A carrier or a part of a carrier including consecutive RBs in which a channel access procedure (CAP) is performed in a shared spectrum
- Channel access procedure (CAP): A procedure of evaluating the availability of a channel based on sensing to determine whether the channel is used by other communication node(s) before a signal transmission. A basic unit for sensing is a sensing slot with a duration $T_{sl}$ of 9us. The sensing slot duration $T_{sl}$ may be considered to be idle when a BS or a UE senses the channel during the sensing slot duration, and power detected for at least 4us within the sensing slot duration is less than an energy detection threshold $X_{Thresh}$. Otherwise, the sensing slot duration $T_{sl}$ of 9us may be considered to be busy. A CAP may be referred to as listen-before-talk (LBT).
- Channel occupancy: Transmission(s) on channel(s) from a BS/UE after a CAP.
- Channel occupancy time (COT): A total time for which the BS/UE and any BS/UE(s) sharing the channel occupancy perform transmission(s) on the channel after the BS/UE corresponding CAPs. When a COT is determined, if a transmission gap is less than or equal to 25us, the gap duration may also be counted in the COT. The COT may be shared for transmission between the BS and corresponding UE(s).
- DL transmission burst: A set of transmissions from the BS without any gaps greater than 16us. Transmissions from the BS separated by a gap of more than 16us are considered as separate DL transmission bursts. The BS may perform transmission(s) after a gap within a DL transmission burst without sensing channel availability.
- UL transmission burst: A set of transmissions from the UE without any gaps greater than 16us. Transmissions from the UE separated by a gap of more than 16us are considered as separate UL transmission bursts. The UE may perform transmission(s) after a gap within a UL transmission burst without sensing channel availability.
- Discovery burst: A DL transmission burst including a set of signal(s) and/or channel(s) confined within a window and associated with a duty cycle. In the LTE-based system, a discovery burst may be transmission(s) initiated by a BS, including a primary synchronization signal (PSS), a secondary synchronization signal (SSS) and a cell-specific reference signal (CRS) and further including a non-zero power CSI-RS. In the NR-based system, a discovery burst may be transmission(s) initiated by a BS, including at least an SS/PBCH block and further including a CORESET for a PDCCH scheduling a PDSCH with SIB1, a PDSCH carrying SIB1, and/or non-zero power CS-RS.

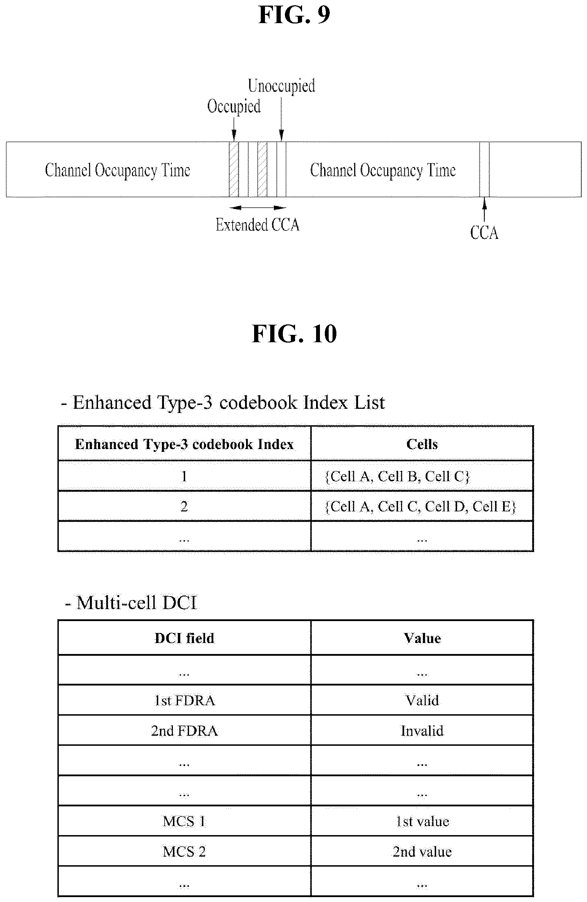

FIG. 9 illustrates a method of occupying resources in an unlicensed band. According to regional regulations concerning the unlicensed band, a communication node in the unlicensed band needs to determine, before signal transmission, whether other communication nodes use a channel. Specifically, the communication node may first perform carrier sensing (CS) before signal transmission to check whether other communication nodes transmit signals. If it is determined that other communication nodes do not transmit signals, this means that clear channel assessment (CCA) is confirmed. When there is a predefined CCA threshold or a CCA threshold configured by higher layer (e.g., RRC) signaling, if energy higher than the CCA threshold is detected in a channel, the communication node may determine that the channel is in a busy state and, otherwise, the communication node may determine that the channel is in an idle state. For reference, in Wi-Fi standard (802.11ac), the CCA threshold is set to -62dBm for a non-Wi-Fi signal and to -82dBm for a Wi-Fi signal. Upon determining that the channel is in an idle state, the communication node may start to transmit signals in the UCell. The above processes may be referred to as listen-before-talk (LBT) or a channel access procedure (CAP). LBT and CAP may be used interchangeably.

Table 6 illustrates exemplary CAPs supported in NR-U.

[Table 6]

|  | Type | Explanation |
|---|---|---|
| DL | Type 1 CAP | CAP with random back-off<br>- time duration spanned by the sensing slots that are sensed to be idle before a downlink transmission(s) is random |
| UL | Type 2 CAP<br>- Type 2A, 2B, 2C | CAP without random back-off<br>- time duration spanned by sensing slots that are sensed to be idle before a downlink transmission(s) is deterministic |
|  | Type 1 CAP | CAP with random back-off<br>- time duration spanned by the sensing slots that are sensed to be idle before a downlink transmission(s) is random |
|  | Type 2 CAP<br>- Type 2A, 2B, 2C | CAP without random back-off<br>- time duration spanned by sensing slots that are sensed to be idle before a downlink transmission(s) is deterministic |

**Multi-cell Scheduling DCI**

NR supports a wide range of spectrum in different frequency ranges. The usability of the 5G Advanced spectrum is expected to increase through the re-farming of frequency bands used in previous generations. In particular, in the lower frequency band, FR1, the available spectrum blocks tend to be further fragmented and distributed. For the FR2 band and a part of the FR1 band, the available spectrum may be widened, which may require operation of multiple intra-band carriers/cells. There is a need to improve throughput and coverage by using these distributed spectrum bands or wider bandwidth spectrum in a more power efficient and flexible manner.

In scheduling data across multiple cells, including intra- and inter-band cells, it is important to increase flexibility and spectrum/power efficiency. In the current 5G NR scheduling scheme, the DCI may only schedule PUSCH/PDSCH for one cell. However, the need for simultaneous scheduling of multiple cells is expected to increase due to spectrum expansion/change in the future. In order to reduce the control overhead according to scheduling, it may be advantageous to perform PUSCH/PDSCH scheduling for multiple cells through one DCI.

Therefore, in order to reduce the DCI overhead for PDSCH/PUSCH scheduling in carrier aggregation (CA) situations where multiple cells are configured in the future, a multi-cell scheduling scheme that simultaneously schedules multiple (serving) cells/CCs (and PDSCH/PUSCH transmissions therethrough) with a single DCI may be considered in Rel-18.

Therefore, for the design of the structure of the DCI (multi-cell DCI) that performs multi-cell scheduling as described above, a method of configuring and interpreting each field in the DCI is proposed. In the present disclosure, the operation of multi-cell scheduling for PDSCH or PUSCH transmission is mainly described, but the operation principle of the proposed method may be applied equally to multi-cell scheduling for PUSCH or PDSCH transmission. Also, in the present disclosure, when a cell may refer to an active BWP configured/indicated for the cell.

Hereinafter, multi-cell scheduling DCI may be referred to as multi-cell DCI or simply as DCI, and may include at least one of DL grant DCI for scheduling PDSCH and UL grant DCI for scheduling to schedule PUSCH.

**Configuration of DL (or UL) DCI fields for multi-cell PDSCH (or PUSCH) scheduling**

The various methods described below for configuring DCI fields (e.g., Method 1 to Method 6) may be understood as types that apply to the respective DCI fields, and not all fields in the multi-cell scheduling DCI are necessarily configured using one specific method. For example, in one multi-cell scheduling DCI, a first DCI field may be configured based on method X, and a second DCI field may be configured based on method Y. In addition, the following distinction between the methods assumes the most detailed configuration for simplicity of description. Therefore, a single DCI field may be configured using a combination of different DCI field configuration methods, as long as they do not conflict with each other.

**1) DCI field configuration types**

**A. Method 1: Shared-reference-cell**

Only one field may be configured in the multi-cell DCI, and the value indicated by the DCI field may be applied only to a specific reference cell (e.g., the cell in which the DCI has been transmitted, the cell with the lowest (or highest) cell index, or the cell indicated by the value of the CIF field) (among the cells scheduled through the multi-cell DCI (configured to operate as indicated by the DCI field), while a specific predefined/set default value is applied to the other cells.

**B. Method 2: Shared-single-cell**

Only (at most) one field may be configured in the multi-cell DCI, and only when one cell is scheduled (through the multi-cell DCI), the DCI field may be configured (the value indicated by the field is applied to the one cell). When multiple cells are scheduled, the DCI field may not be configured and may be omitted (In this case, a specific predefined/set default value may be applied to the multiple cells).

**C. Method 3: Shared-cell-common**

Only one field may be configured in the multi-cell DCI, and the value indicated by the DCI field may be applied to all cells (scheduled through the multi-cell DCI) in common.

**D. Method 4: Shared-state-extension**

Only one field may be configured in the multi-cell DCI, and each of the multiple states/codepoints that may be indicated by the DCI field may be configured/set by a combination of multiple pieces of information about multiple cells (rather than information about a single cell).

**E. Method 5: Separate**

Fields whose number is equal to the number of cells scheduled through the multi-cell DCI (configured to operate as indicated by the corresponding DCI field) may be configured (in the DCI). Each scheduled cell may be matched to an individual field such that the value indicated by the field may be applied to the cell. For example, when the frequency domain resource allocation (FDRA) information and/or MCS information are each configured in the Separate method, the multi-cell DCI may include, but is not limited to, FDRA information and/or MCS information for each of the multiple cells (e.g., first FDRA information/first MCS information for a first scheduled cell, second FDRA information/second MCS information for a second scheduled cell, etc.).

**F. Method 6: Omit**

The corresponding DCI field may not be configured in the multi-cell DCI and may be omitted (In this case, a specific predefined/set default value may be applied to the cells scheduled through the multi-cell DCI).

**2) Examples of applying the proposed methods according to DCI fields**

For each of the various DCI fields that may be included in the multi-cell DCI, examples of the application of "1) DCI field configuration types" described above are discussed below.

**A. Bandwidth part (BWP) indicator**

i. Opt 1: Applying the Shared-reference-cell method

The value (BWP index) indicated by the corresponding DCI field may be applied only to a specific reference cell (among the cells scheduled through the multi-cell DCI), and the current operating BWP may be maintained for the other cells without BWP switching.

ii. Opt 2: Applying the Shared-single-cell method

Only when one cell is scheduled (through the multi-cell DCI), the corresponding DCI field may be configured (and the value (BWP index) indicated therethrough may be applied to the cell). When multiple cells are scheduled, the corresponding DCI field may not be configured and may be omitted (In this case, the current operating BWP may be maintained for the multiple cells without BWP switching).

iii. Opt 3: Applying the Omit method

The corresponding DCI field may not be configured in the multi-cell DCI and may be omitted (In this case, the current operating BWP may be maintained without BWP switching for the cells scheduled through the multi-cell DCI).

**B. VRB-to-PRB mapping (RB mapping)**

i. Opt 1: Applying the Shared-reference-cell method

The value (RB mapping method) indicated by the corresponding DCI field may be applied only to the PDSCH on a specific reference cell (among the cells scheduled through the multi-cell DCI), while a specific default value (e.g., non-interleaved mapping) may be applied to the PDSCH on the other cells.

ii. Opt 2: Applying the Shared-single-cell method

Only when one cell is scheduled (through the multi-cell DCI), the corresponding DCI field may be configured (and the value (RB mapping method) indicated therethrough may be applied to the PDSCH on the cell). When multiple cells are scheduled, the corresponding DCI field may not be configured and may be omitted (In this case, a specific default value (e.g., non-interleaved mapping method) may be applied to the PDSCH on the multiple cells).

iii. Opt 3: Applying the Omit method

The corresponding DCI field may not be configured in the multi-cell DCI and may be omitted (In this case, a specific default value (e.g., non-interleaved mapping method) may be applied to the PDSCHs on cells scheduled through the multi-cell DCI).

iv. Opt 4: Applying the Shared-cell-common method

The value (RB mapping method) indicated by the corresponding DCI field may be applied in common to the PDSCHs on all cells (scheduled through the multi-cell DCI) (the cells may be all cells for which the RB mapping indicator bit is configured (among the cells scheduled through the multi-cell DCI)).

**C. PRB bundling size indicator**

i. Opt 1: Applying Shared-reference-cell method

The value (PRB bundle size) indicated by the corresponding DCI field may be applied only to a PDSCH on a specific reference cell (among the cells scheduled through the multi-cell DCI), while a specific default value (e.g., a PRB bundle size that is assumed to be the staticBundling configuration or is predefined/set) may be applied to PDSCHs on the other cells.

ii. Opt 2: Applying the Shared-single-cell method

Only when one cell is scheduled (through the multi-cell DCI), the corresponding DCI field may be configured (and the value (PRB bundle size) indicated therethrough may be applied to the PDSCH on the cell). When multiple cells are scheduled, the corresponding DCI field may not be configured and may be omitted (In this case, a specific default value (e.g., a PRB bundle size that is assumed to be the staticBundling configuration or is predefined/set) may be applied to the PDSCHs on the multiple cells).

iii. Opt 3: Applying the Separate method

An individual field may be configured for each cell scheduled through the multi-cell DCI, wherein the size of the individual field may vary depending on the number of scheduled cells (e.g., the field size may be smaller in the case where the number of scheduled cells is greater than N (e.g., N = 1) than in the case where the number of scheduled cells is less than or equal to N).

iv. Opt 4: Applying the Omit method

The corresponding DCI field may not be configured in the multi-cell DCI and may be omitted (In this case, a specific default value (e.g., a PRB bundle size that is assumed to be the staticBundling configuration or is predefined/set) may be applied to the PDSCHs on cells scheduled through the multi-cell DCI).

**D. Rate matching (RM) indicator**

i. Opt 1: Applying the Shared-reference-cell method

The value (RM target resource) indicated by the corresponding DCI field may be applied only to the PDSCH on a specific reference cell (among the cells scheduled through the multi-cell DCI), while PDSCHs on other cells may be received on the assumption that there is no indication of the RM target resource/operation.

ii. Opt 2: Applying the Shared-single-cell method

Only when one cell is scheduled (through the multi-cell DCI), the corresponding DCI field may be configured (and the value (RM target resource) indicated therethrough may be applied to the PDSCH on the cell). When multiple cells are scheduled, the corresponding DCI field may not be configured and may be omitted (In this case, the PDSCHs on the multiple cells may be received on the assumption that there is no indication of the RM target resource/operation).

iii. Opt 3: Applying the Omit method

The corresponding DCI field may not be configured in the multi-cell DCI and may be omitted (In this case, PDSCHs on cells scheduled through the multi-cell DCI may be received on the assumption that there is no indication of the RM target resource/operation).

iv. Opt 4: Applying the Separate method

An individual field may be configured for each cell scheduled through the multi-cell DCI, wherein the size of the individual field may vary depending on the number of scheduled cells (e.g., the field size may be smaller in the case where the number of scheduled cells is greater than N (e.g., N = 1) than in the case where the number of scheduled cells is less than or equal to N).

v. Opt 5: Applying the Shared-state-extension method

Each of the multiple states that may be indicated by the corresponding DCI field may be configured/set by a combination of multiple RM target resources for multiple PDSCHs on multiple cells (rather than an RM target resource for the PDSCH on a single cell), and thus a specific combination of RM target resources (for multiple PDSCHs on multiple cells) may be indicated through the one field.

### E. ZP CSI-RS trigger

i. Opt 1: Applying Shared-reference-cell method

The value (ZP CSI-RS resource) indicated by the corresponding DCI field may be applied only to the PDSCH on a specific reference cell (among the cells scheduled through the multi-cell DCI), while the PDSCHs on the other cells may be received on the assumption that there is no ZP CSI-RS resource indication.

ii. Opt 2: Applying the Shared-single-cell method

Only when one cell is scheduled (through the multi-cell DCI), the corresponding DCI field may be configured (and the value (ZP CSI-RS resource) indicated therethrough may be applied to the PDSCH on the cell). When multiple cells are scheduled, the corresponding DCI field may not be configured and may be omitted (In this case, the PDSCHs on the multiple cells may be received on the assumption that there is no ZP CSI-RS resource indication).

iii. Opt 3: Applying the Omit method

The corresponding DCI field may not be configured in the multi-cell DCI and may be omitted (In this case, the PDSCHs on the cells scheduled through the multi-cell DCI may be received on the assumption that there is no ZP CSI-RS resource indication).

iv. Opt 4: Applying the Separate method

An individual field may be configured for each cell scheduled through the multi-cell DCI, wherein the size of the individual field may vary depending on the number of scheduled cells (e.g., the field size may be smaller in the case where the number of scheduled cells is greater than N (e.g., N = 1) than in the case where the number of scheduled cells is less than or equal to N).

v. Opt 5: Applying the Shared-state-extension method

Each of the multiple states that may be indicated by the corresponding DCI field may be configured/set by a combination of multiple ZP CSI-RS resources for multiple PDSCHs on multiple cells (rather than a ZP CSI-RS resource for the PDSCH on a single cell), and thus a specific combination of ZP CSI-RS resources (for multiple PDSCHs on multiple cells) may be indicated through the one field.

### F. One-shot HARQ-ACK (Type-3 codebook) request

i. Opt 1: Applying the Shared-single-cell method

Only when one cell is scheduled (through the multi-cell DCI), the corresponding DCI field may be configured (and whether to configure/transmit Type-3 codebook-based HARQ-ACK feedback (to which a corresponding HARQ-ACK for each HARQ (process) ID is mapped/configured may be indicated therethrough). When multiple cells are scheduled, the corresponding DCI field may not be configured and may be omitted (In this case, it may be assumed that there is no indication of configuration/transmission of the Type-3 codebook-based HARQ-ACK feedback (through the multi-cell DCI)).

ii. Opt 2: Applying the Omit method

The corresponding DCI field may not be configured in the multi-cell DCI and may be omitted (and thus, when cells are scheduled through the multi-cell DCI, it may be assumed that there is no indication of the Type-3 codebook-based HARQ-ACK feedback configuration/transmission (through the multi-cell DCI)).

### G. Enhanced Type-3 codebook (e-Type-3 CB index) indicator

i. Opt 1: Applying the Shared-single-cell method

Only when one cell is scheduled (through the multi-cell DCI), the corresponding DCI field may be configured (and whether to configure/transmit an e-Type-3 CB (index) (to which HARQ-ACKs for only some cells and/or some HARQ IDs among the CA-applied cells). When multiple cells are scheduled, the corresponding DCI field may not be configured and may be omitted (In this case, it may be assumed that there is no indication of configuration/transmission of the e-Type-3 CB (through the multi-cell DCI)).

ii. Opt 2: Applying the Omit method

The corresponding DCI field may not be configured and may be omitted in the multi-cell DCI (and thus, when cells are scheduled through the multi-cell DCI, it may be assumed that there is no indication of e-Type-3 CB configuration/-transmission (through the DCI)).

iii. Opt 3: Using the MCS field for a specific (reference) cell

1. When an invalid value (or a specific predefined value) is indicated through a frequency domain resource assignment (FDRA) field corresponding to a specific (reference) one of one or more (schedulable) cells indicated through the multi-cell DCI (or through the DCI with e-Type-3 CB configuration/transmission indicated) (e.g., all bits are indicated as '0' in the case of a resource allocation (RA) type in a bitmap form (e.g. type 0), or all bits are indicated as '1' in the case of an RA type in the form of a resource indication value (RIV) (e.g. type 1)), the e-Type-3 CB index information may be signaled/indicated through the MCS field corresponding to the specific (reference) cell. For example, one of the one or more e-Type-3 CB indexes configured for the UE through higher layer signaling may be indicated through the multi-cell DCI. Each e-Type-3 CB index may correspond to a subset of all cells configured for the UE, and the cells to perform e-Type-3 CB reporting may be determined based on the e-Type-3 CB indexes indicated through the multi-cell DCI. For example, referring to FIG. 10, it is assumed that e-Type-3 CB index 1 corresponds to {Cell A, Cell B, Cell C}, e-Type-3 CB index 2 corresponds to {Cell A, Cell C, Cell D, Cell E}, and the multi-cell DCI indicating/triggering e-Type-3 CB reporting is received by the UE. An invalid value (or a specific predefined value) may be indicated through a second FDRA field for a specific cell among the FDRA fields in the multi-cell DCI, and an e-Type-3 CB index may be indicated through the second MCS field for the specific cell among the FDRA fields in the multi-cell DCI. For example, when an e-Type-3 CB index 1 is indicated by a second value set in the second MCS field, the UE may generate and report an e-Type 3 CB containing HARQ-ACKs for {Cell A, Cell B, Cell C}. In this way, not MCS but e-Type-3 CB index information may be specified through the MCS field for a specific cell associated with the FDRA field by which an invalid value (or a specific predefined value) is indicated among the FDRA fields. For example, in FIG. 10, when the MCS field for a specific cell associated with a second FDRA field by which an invalid value (or a predefined specific value) is indicated among the FDRA fields is a second MCS field, the second MCS field may be reused to indicate e-Type-3 CB index information (rather than MCS).

a. In one example, the UE may operate assuming that there is no PDSCH scheduling/transmission for the specific (reference) cell. For example, the UE may determine that PDSCH is not scheduled by the multi-cell DCI for a specific cell associated with the FDRA field that indicates an invalid value (or a specific predefined value).
b. In one example, the UE may be allowed to schedule/transmit PDSCH for a cell other than the specific (reference) cell among the one or more cells indicated (schedulable) through the multi-cell DCI through which the e-Type-3 CB configuration/transmission is indicated (based on the invalid FDRA) as described above. For example, referring to FIG. 10, the first FDRA field for a cell other than the specific cell may contain valid FDRA information, and the first value of the first MCS field may be the MCS for the PDSCH. Alternatively, the UE may operate assuming that there is no PDSCH scheduling/transmission even for the cell (other than the specific (reference) cell) among the one or more cells indicated (schedulable) through the multi-cell DCI through which the e-Type-3 CB configuration/transmission is indicated (based on the invalid FDRA) as described above.

2. The following (cell combination) table-based method and FDRA field based-method may be applied to the indication of a co-scheduled cell combination (i.e., co-scheduled cell set) from the multi-cell DCI.

a. In the (cell combination) table-based method, a table (or rows therein) may be configured by configuring (one or more) multiple cell combinations through the RRC, and a specific indicator in the multi-cell DCI may be used to indicate which of the cell combinations (corresponding to the rows) is scheduled.
b. In the FDRA field-based method, only the cell(s) for which a valid value is indicated through an individually configured FDRA field for each cell (of the candidate cells (i.e., candidate cell set) configured to be schedulable from the DCI) in the multi-cell DCI may be scheduled (while cells for which an invalid value is indicated by the FDRA field may be considered/processed as not scheduled) (without a separate table/indicator as above).

3. Accordingly, when the table-based (scheduled) cell combination indication method is configured/applied, the following e-Type-3 codebook (CB) feedback triggering methods may be considered.

a. Opt A: When an invalid FDRA value is indicated for a specific one of the (scheduled) cells indicated through the multi-cell DCI (through a specific indicator in the DCI with e-Type-3 CB configuration/transmission indicated), the UE may operate to consider/process the value as indicating that there is no scheduling on any of the scheduled cells including the specific cell and perform only the indicated e-Type-3 CB configuration/transmission.

i) In this case, the e-Type-3 CB index information may be signaled/indicated through the MCS field corresponding to the specific cell.
ii) The specific cell may be limited to a cell with the smallest (or largest) cell index in the co-scheduled cell set, a cell with the smallest (or largest) cell index in the entire candidate cell set, a scheduling cell on which the multi-cell DCI is transmitted, or a cell configured separately through RRC.

b. Opt B: When an invalid FDRA value is indicated for all the (scheduled) cells indicated through the multi-cell DCI (through a specific indicator in the DCI with e-Type-3 CB configuration/transmission indicated), the UE may operate to consider/process the value as indicating that there is no scheduling on any of the scheduled cells and perform only the indicated e-Type-3 CB configuration/transmission.

i) In this case, the e-Type-3 CB index information may be signaled/indicated (as the same one CB index) through all MCS fields corresponding to the respective scheduled cells.
ii) Alternatively, in this case, the e-Type-3 CB index information may be signaled/indicated through an MCS field corresponding to one specific cell (e.g., the cell with the smallest (or largest) cell index) among the scheduled cells.

c. Opt C: When an invalid FDRA value is indicated for at least one of the (scheduled) cells indicated through the multi-cell DCI (through a specific indicator in the DCI with e-Type-3 CB configuration/transmission indicated), the UE may operate to consider/process the value as indicating that there is no scheduling on any of the scheduled cells and perform only the indicated e-Type-3 CB configuration/transmission.

i) In this case, the e-Type-3 CB index information may be signaled/indicated (as the same single CB index) through the MCS field(s) corresponding to the respective scheduled cell(s) for which the invalid FDRA has been indicated above.
ii) Alternatively, in this case, the e-Type-3 CB index information may be signaled/indicated through the MCS field corresponding to one specific cell (e.g., the cell with the smallest (or largest) cell index) among the scheduled cell(s) for which the invalid FDRA has been indicated above.

4. Further, when the FDRA-based (scheduled) cell combination indication method is configured/applied, the following e-Type-3 CB feedback triggering methods may be considered.

a. Opt X: When an invalid FDRA value is indicated through the multi-cell DCI for one specific cell among the candidate cells (which have e-Type-3 CB configuration/transmission indicated, and are configured to be schedulable through the DCI), the UE may operate to consider/process the value as indicating that there is no scheduling on the specific cell (and the cells for which the invalid FDRA value has been indicated) and perform PDSCH reception scheduled on the other cells (for which a valid FDRA value has been indicated) and the indicated e-Type-3 CB configuration/transmission.

i) In this case, the e-Type-3 CB index information may be signaled/indicated through an MCS field corresponding to the specific cell.
ii) In this case, the timing of the e-Type-3 CB feedback transmission may be determined based on one specific PDSCH (e.g., the PDSCH whose last symbol is the latest in time) among the PDSCHs scheduled on the remaining cells (for which the valid FDRA value is indicated) excluding the specific cell (and a cell for which the invalid FDRA value is indicated including the same) (by, for example, applying the value of K1 at the time of the PDSCH).
iii) Alternatively, in this case, the UE may operate to consider/process the value as indicating that there is no scheduling on any of the candidate cells and perform only the indicated e-Type-3 CB configuration/transmission.
iv) The specific cell may be limited to the cell with the smallest (or largest) cell index in the entire candidate cell set, the scheduling cell on which the multi-cell DCI is transmitted, or the cell configured separately through RRC.

b. Opt Y: When the invalid FDRA value is indicated for all candidate cells (which have e-Type-3 CB configuration/transmission indicated, and are configured to be schedulable through the multi-cell DCI) through the multi-cell DCI, the UE may operate to consider/process the value as indicating that there is no scheduling on any of the candidate cells and perform only the indicated e-Type-3 CB configuration/transmission.

i) In this case, the e-Type-3 CB index information may be signaled/indicated (as the one CB index) through all MCS fields corresponding to the respective candidate cells.
ii) Alternatively, in this case, the e-Type-3 CB index information may be signaled/indicated through the MCS field corresponding to one specific cell (e.g., the cell with the smallest (or largest) cell index) among the scheduled cells.

c. Opt Z: When an invalid FDRA value is indicated through the multi-cell DCI for at least one of the candidate cells (which have e-Type-3 CB configuration/transmission indicated, and are configured to be schedulable through the DCI), the UE may operate to consider/process the value as indicating that there is no scheduling on the cell(s) for which the invalid FDRA is indicated and perform PDSCH reception scheduled on the other cells and the indicated e-Type-3 CB configuration/transmission.

i) In this case, the e-Type-3 CB index information may be signaled/indicated (as the same single CB index) through the MCS field(s) corresponding to the respective scheduled cell(s) for which the invalid FDRA has been indicated above.
ii) Alternatively, in this case, the e-Type-3 CB index information may be signaled/indicated through the MCS field corresponding to one specific cell (e.g., the cell with the smallest (or largest) cell index) among the scheduled cell(s) for which the invalid FDRA has been indicated above.
iii) In this case, the timing of the e-Type-3 CB feedback transmission may be determined based on one specific PDSCH (e.g., the PDSCH whose last symbol is the latest in time) among the PDSCHs scheduled on the remaining cell(s) excluding the cell(s) for which the invalid FDRA is indicated (by, for example, applying the value of K1 at the time of the PDSCH).
iv) Alternatively, in this case, the UE may operate to consider/process the value as indicating that there is no scheduling on any of the candidate cells and perform only the indicated e-Type-3 CB configuration/transmission.

## H. HARQ-ACK retransmission indicator

i. Opt 1: Applying the Shared-single-cell method

Only when one cell is scheduled (through the multi-cell DCI), the corresponding DCI field may be configured (HARQ-ACK retransmission status (which indicates that HARQ-ACK directed to be transmitted at a specific time (slot A) should be retransmitted at another time (slot B)) is indicated therethrough). When multiple cells are scheduled, the corresponding DCI field may not be configured and may be omitted (In this case, it is assumed that there is no indication of HARQ-ACK retransmission (through the multi-cell DCI)).

ii. Opt 2: Applying the Omit method

The corresponding DCI field may not be configured in the multi-cell DCI and may be omitted (and thus, when cells are scheduled through the multi-cell DCI, it may be assumed that that there is no indication of HARQ-ACK retransmission (through the DCI)).

iii. Opt 3: Using the MCS field for a specific (reference) cell

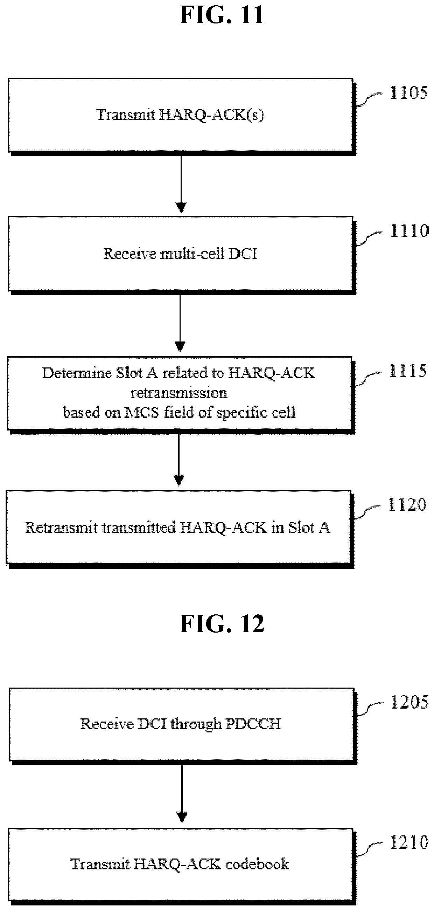

1. Information for determining the slot A (target of HARQ-ACK retransmission), for example, offset information indicating slot A, may be signaled/indicated through the MCS field corresponding to a specific (reference) cell among the one or more (schedulable) cells indicated through the multi-cell DCI (through the DCI when HARQ-ACK retransmission is indicated). For example, referring to FIG. 11, the UE transmits HARQ-ACK (e.g., a Type-1 or Type-2 HARQ-ACK codebook) in each of one or more slots (1105) and receives multi-cell DCI (1110). Based on the HARQ-ACK retransmission being indicated, the UE may determine that the MCS field for a specific (reference) cell among the MCS fields in the multi-cell DCI contains information for determining Slot A related to the HARQ-ACK retransmission. The UE may determine Slot A among the one or more slots in which the HARQ-ACK is transmitted prior to the multi-cell DCI reception slot, based on the MCS field for the specific (reference) cell (1115). The UE may retransmit the HARQ-ACK transmitted in Slot A in a slot that is later than the multi-cell DCI reception slot (1120). In one example, the multi-cell DCI may include a HARQ-ACK retransmission indication field to trigger the HARQ-ACK retransmission.

    a. For example, the UE may operate assuming that there is no PDSCH scheduling/transmission for the specific (reference) cell.

    b. For example, PDSCH scheduling/transmission may be enabled for the cells other than the specific (reference) cell among the one or more (schedulable) cells indicated through the multi-cell DCI for which HARQ-ACK retransmission is indicated (using the MCS field corresponding to the specific (reference) cell) as described above. For example, the MCS field for the cells other than the specific cell may contain valid MCS information, rather than information about Slot A, which is the target of the HARQ-ACK retransmission. Alternatively, even for the cells (other than the specific (reference) cell) among the one or more (schedulable) cells indicated through the multi-cell DCI for which HARQ-ACK retransmission is indicated (using the MCS field corresponding to the specific (reference) cell) as described above, the UE may operate assuming that there is no PDSCH scheduling/transmission.

2. In this regard, when the table-based (scheduled) cell combination indication method is configured/applied, the following HARQ-ACK retransmission triggering methods may be considered.

    a. Opt A: Slot offset information indicating slot A (target of HARQ-ACK retransmission) may be signaled/indicated through the MCS field corresponding to a specific (one) cell among the (scheduled) cells indicated through the multi-cell DCI (through a specific indicator in the DCI when HARQ-ACK retransmission is indicated).

        i) In this case, the UE may operate to consider/process the value as indicating that there is no scheduling on any of the scheduled cells including the specific cell and perform only the indicated HARQ-ACK retransmission.

        ii) The specific cell may be limited to the cell for which the invalid FDRA value is indicated among the cells in the co-scheduled cell set (or the cell with the smallest (or largest) cell index when there are multiple cells for which the value is indicated), the cell with the smallest (or largest) cell index in the co-scheduled cell set, the cell with the smallest (or largest) cell index in the entire candidate cell set, the scheduling cell on which the multi-cell DCI is transmitted, or the cell configured separately through RRC.

3. Further, when the FDRA-based (scheduled) cell combination indication method is configured/applied, the following HARQ-ACK retransmission triggering methods may be considered.

    a. Opt X: Slot offset information indicating slot A (target of HARQ-ACK retransmission) may be signaled/indicated through the MCS field corresponding to a specific (one) cell among the candidate cells through the multi-cell DCI (configured to be schedulable through the DCI when HARQ-ACK retransmission is indicated).

        i) In this case, the UE may operate to consider/process the information as indicating that there is no scheduling on that specific cell (and the cell for which the invalid FDRA value is indicated), and perform PDSCH reception scheduled on the other cells (for which a valid FDRA value is indicated) and the indicated HARQ-ACK retransmission.

        ii) Alternatively, in this case, the timing of the transmission of the HARQ-ACK retransmission target feedback may be determined based on one specific PDSCH (e.g., the PDSCH whose last symbol is the latest in time) among the PDSCHs scheduled on the remaining cells (for which the valid FDRA value is indicated) excluding the specific cell (and a cell for which the invalid FDRA value is indicated) (by, for example, applying the value of K1 at the time of the PDSCH).

        iii) Alternatively, in this case, the UE may operate to consider/process the information as indicating that there is no scheduling on any of the candidate cells (regardless of whether the FDRA value indicated on a per-cell basis is invalid), and perform only the indicated HARQ-ACK retransmission.

        iv) The specific cell may be limited to the cell for which the invalid FDRA value is indicated among the cells in the entire candidate cell set (or the cell with the smallest (or largest) cell index when there are multiple cells for which the value is indicated), the cell with the smallest (or largest) cell index in the entire candidate cell set, the scheduling cell on which the multi-cell DCI is transmitted, or the cell configured separately through RRC.

I. SRS request

i. Opt 1: Applying Shared-reference-cell method

The value (SRS transmission resource) indicated by the corresponding DCI field may be applied only to a specific reference cell (among the cells scheduled through the multi-cell DCI), and the other cells may be operated assuming that there is no SRS transmission indication.

ii. Opt 2: Applying the Shared-single-cell method

Only when one cell is scheduled (through the multi-cell DCI), the corresponding DCI field may be configured (and the value (SRS transmission resource) indicated therethrough may be applied to the cell). When multiple cells are scheduled, the corresponding DCI field may not be configured and may be omitted (In this case, it may be assumed that there is no SRS transmission indication for the multiple cells).

iii. Opt 3: Applying the Omit method

The corresponding DCI field may not be configured in the multi-cell DCI and may be omitted (In this case, it may be assumed that there is no SRS transmission indication for the cells scheduled through the multi-cell DCI).

**J. CBG transmission information (CBGTI)**

i. Opt 1: Applying the Shared-single-cell method

Only when one cell is scheduled (through the multi-cell DCI), the corresponding DCI field may be configured (and the value (CBG index) indicated therethrough may be applied to the PDSCH on the cell). When multiple cells are scheduled, the corresponding DCI field may not be configured and may be omitted (In this case, the PDSCHs on the multiple cells may be received on the assumption that there is no scheduling of CBG-based PDSCH transmission).

ii. Opt 2: Applying the Omit method

The corresponding DCI field may not be configured in the multi-cell DCI and may be omitted (In this case, PDSCHs on cells scheduled through the multi-cell DCI may be received on the assumption that there is no scheduling of CBG-based PDSCH transmission).

**K. CBG flushing out information (CBGFI)**

i. Opt 1: Applying the Shared-single-cell method

Only when one cell is scheduled (through the multi-cell DCI), the corresponding DCI field may be configured (and the value (CBG buffer flushing status) indicated therethrough may be applied to the PDSCH on the cell). When multiple cells are scheduled, the corresponding DCI field may not be configured and may be omitted (In this case, the PDSCHs on the multiple cells may be received on the assumption that there is no indication of the CBG buffer flushing).

ii. Opt 2: Applying the Omit method

The corresponding DCI field may not be configured in the multi-cell DCI and may be omitted (In this case, PDSCHs on cells scheduled through the multi-cell DCI may be received on the assumption that there is no indication of the CBG buffer flushing).

**L. Priority indicator (PI)**

i. Opt 1: Applying Shared-cell-common method

The value (low priority (LP) or high priority (HP)) indicated by the corresponding DCI field may be applied in common to the PDSCHs (and corresponding HARQ-ACKs) on all cells (scheduled through the multi-cell DCI), and the cells may be all cells for which the PI is configured (among the cells scheduled through the multi-cell DCI).

> a. For a cell for which the PI is not configured (among the cells scheduled through the multi-cell DCI) when HP is indicated through the aforementioned field in the DCI, Alt 1) it may be assumed that there is no PI indication (or that LP is indicated), or Alt 2) it may be assumed that there is no PDSCH scheduling for the cell (for which the PI is not configured) and PDSCH reception on the cell may be skipped.
> b. When LP is indicated through the field in the multi-cell DCI, the operation of Alt 1 may be applied to the cell for which the PI is not configured (among the cells scheduled through the DCI).

ii. Opt 2: Applying the Shared-reference-cell method

The value (LP or HP) indicated by the corresponding DCI field may be applied only to the PDSCH (and corresponding HARQ-ACK) on a specific reference cell (among the cells scheduled through the multi-cell DCI), while Alt 1 and/or Alt 2 may be applied to the other cells.

iii. Opt 3: Applying the Shared-single-cell method

Only when one cell is scheduled (via multi-cell DCI), the corresponding DCI field may be configured (and the value (LP or HP) indicated therethrough may be applied to the PDSCH (and corresponding HARQ-ACK) on the cell). When multiple cells are scheduled, the corresponding DCI field may be not configured and may be omitted (In this case, Alt 1 may be applied).

iv. Opt 4: Applying the Omit method

The corresponding DCI field may not be configured in the multi-cell DCI and may be omitted (In this case, Alt 1 may be applied).

v. Note 1: When HP is indicated for at least one of multiple cells scheduled through the same multi-cell DCI (LP is indicated for the other cells), all HARQ-ACKs corresponding to PDSCH transmissions on all the scheduled cells may be determined to be HP. In this case, an HP PUCCH resource may be indicated through the PUCCH resource indicator (PRI) field in the DCI.

vi. Note 2: The operation of indicating HP for some of multiple cells scheduled through the same multi-cell DCI and indicating LP for the other cells may be allowed only when multiplexing between PUCCH/PUSCH having different priorities is enabled. In this case, the HARQ-ACKs corresponding to the PDSCHs on the cells for which HP is indicated may be determined to be HP, HARQ-ACKs corresponding to the PDSCHs on the cells for which LP is indicated are determined to be LP. In this state, separate encoding may be applied to the HP HARQ-ACKs and LP HARQ-ACKs, or all HARQ-ACKs corresponding to PDSCH transmissions on all scheduled cells may be determined to be HP (Even in this case, an HP PUCH resource may be indicated through the PRI field in the DCI).

**M. Minimum applicable scheduling offset (min K0/K2) indicator**

i. Opt 1: Applying the Shared-cell-common method

The value (whether to apply min K0/K2) indicated by the corresponding DCI field may be applied in common to all cells (scheduled through multi-cell DCI). The cells may be all cells for which min K0/K2 is set (among the cells scheduled through the multi-cell DCI).

ii. Opt 2: Applying the Shared-reference-cell method

The value (whether to apply min K0/K2) indicated by the corresponding DCI field may be applied only to a specific reference cell (among the cells scheduled through the multi-cell DCI), and the other cells may be operated on the assumption that there is no indication about application of min K0/K2.

iii. Opt 3: Applying the Shared-single-cell method

Only when one cell is scheduled (through the multi-cell DCI), the corresponding DCI field may be configured (and the value (whether to apply min K0/K2) indicated therethrough may be applied to the cell). When multiple cells are scheduled, the corresponding DCI field may not be configured and may be omitted (In this case, it may be assumed that there is no indication of application of min K0/K2 for the multiple cells).

iv. Opt 4: Applying the Omit method

The corresponding DCI field may not be configured in the multi-cell DCI and may be omitted (In this case, it may be assumed that there is no indication of application of min K0/K2 for the cells scheduled through the multi-cell DCI).

### N. SCell dormancy indication

i. Opt 1: Applying the Shared-single-cell method

Only when one cell is scheduled (through the multi-cell DCI), the corresponding DCI field may be configured (and the value (whether to indicate a dormant BWP (switching to the BWP)) indicated therethrough may be applied). When multiple cells are scheduled, the corresponding DCI field may not be configured and may be omitted (In this case, it may be assumed that there is no indication of the dormant BWP (switching to the BWP) through the DCI).

ii. Opt 2: Applying the Omit method

The corresponding DCI field may not be configured in the multi-cell DCI and may be omitted (In this case, it may be assumed that there is no indication of the dormant BWP (switching to the BWP)).

iii. Note: When a cell dormancy operation is indicated without actual PDSCH scheduling on multiple cells indicated through the multi-cell DCI (by a specific (e.g. CIF or new) field in the DCI), the corresponding cell dormancy information may be signaled through a combination of fields such as MCS, NDI, RV, HARQ process ID, Antenna ports, and DMRS sequence initialization corresponding to a specific reference cell (first (and/or second) TB index of the cell) among the cells.

iv. Note: Alternatively, the indication of the cell dormancy operation may be allowed without actual PDSCH scheduling (on the cells) only when only one cell is indicated through the multi-cell DCI. When multiple cells are indicated through the multi-cell DCI, the operation to indicate the cell dormancy without actual PDSCH scheduling may not be allowed.

### O. PDCCH monitoring skipping/SS set group switching indicator

i. Opt 1: Applying the Shared-cell-common method

The value (whether PDCCH monitoring skipping application status/interval or the monitoring target SS (search space) set group index) indicated by the corresponding DCI field may be applied to all cells (scheduled through the multi-cell DCI) in common. The cells may be all cells for which the PDCCH monitoring skipping/SS set group switching is configured (among the cells scheduled through the multi-cell DCI).

ii. Opt 2: Applying the Shared-reference-cell method

The value (whether PDCCH monitoring skipping application status/interval or the monitoring target SS set group index) indicated by the corresponding DCI field may be applied only to a specific reference cell (among the cells scheduled through the multi-cell DCI). The other cells may be operated to receive PDCCHs on the assumption that there is no PDCCH monitoring skipping/SS set group switching indication.

iii. Opt 3: Applying the Shared-single-cell method

Only when one cell is scheduled (through the multi-cell DCI), the corresponding DCI field may be configured (and the value (the PDCCH monitoring skipping application status/interval or monitoring SS set group index) may be applied to the cell). When multiple cells are scheduled, the corresponding DCI field may not be configured and may be omitted (In this case, the PDCCH may be received on the assumption that there is no PDCCH monitoring skipping/SS set group switching indication for the multiple cells).

iv. Opt 4: Applying the Omit method

The corresponding DCI field may not be configured in the multi-cell DCI and may be omitted (In this case, the PDCCH may be received on the assumption that there is no PDCCH monitoring skipping/SS set group switching indication for the cell scheduled through the multi-cell DCI).

FIG. 12 is a diagram illustrating a method of receiving a signal by a UE according to one embodiment.

Referring to FIG. 12, a UE may receive, through a physical downlink control channel (PDCCH), downlink control information (DCI) including at least one frequency domain resource allocation (FDRA) field and at least one modulation and coding scheme (MCS) field (1205).

The UE may transmit a hybrid automatic repeat request-acknowledgement (HARQ-ACK) codebook based on the DCI (1210).

The DCI may support multi-cell scheduling based on a plurality of serving cells configured in the UE.

Based on that a first FDRA field for a first cell included in the DCI is set to a specific value other than a valid FDRA value for the first cell, an index of the HARQ-ACK codebook may be determined through a first MCS field for the first cell included in the DCI.

The HARQ-ACK codebook may be a type-3 HARQ-ACK codebook related to at least a part of the plurality of cells.

The index of the HARQ-ACK codebook may be related to at least one of cell information or HARQ information for the type-3 HARQ-ACK codebook.

The UE may skip receiving a physical downlink shared channel (PDSCH) for the first cell allocated with the specific value other than the valid FDRA value among the plurality of cells.

The UE may receive the PDSCH based on the DCI on each of one or more cells other than the first cell among the plurality of cells.

Based on transmission of a type-3 HARQ-ACK codebook is requested to the UE through the DCI, index information related the type-3 HARQ-ACK codebook may be determined through the first MCS field for the first cell included in the DCI.

Based on transmission of a type-3 HARQ-ACK codebook is requested to the UE through the DCI, the UE may skip receiving a physical downlink shared channel (PDSCH) for the first cell as well as for the other cells of the plurality of cells.

The first cell may be a cell having a lowest or highest serving cell index among the plurality of cells.

The DCI may include includes a FDRA field and a MCS field for each of co-scheduled cells.

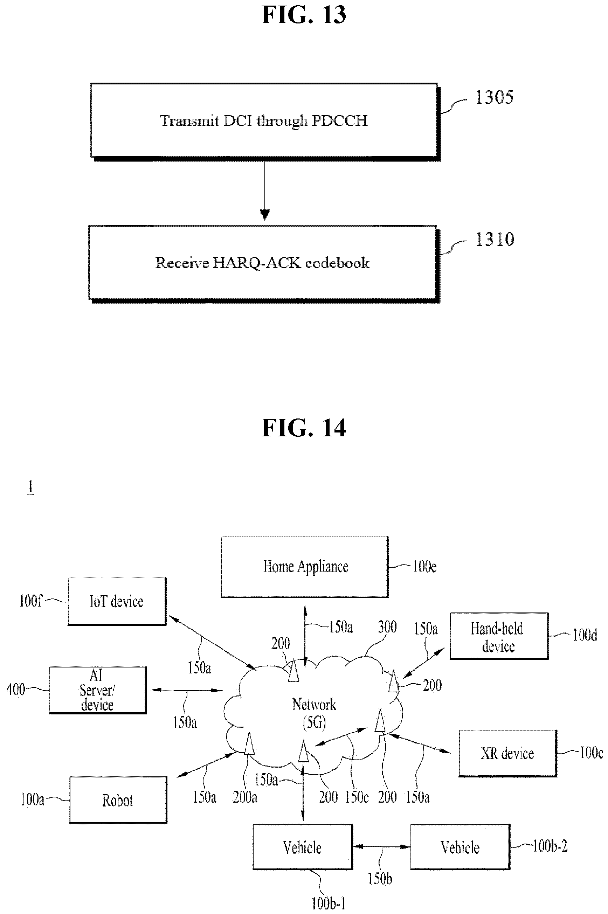

FIG. 13 is a diagram illustrating a method of transmitting a signal by a BS according to one embodiment.

Referring to FIG. 13, the BS may transmit through a physical downlink control channel (PDCCH), downlink control information (DCI) including at least one frequency domain resource allocation (FDRA) field and at least one modulation and coding scheme (MCS) field to a UE (1305).

The BS may receive a hybrid automatic repeat request-acknowledgement (HARQ-ACK) codebook from the UE based on the DCI (1310).

The DCI may support multi-cell scheduling based on a plurality of cells configured in the UE.

Based on that a first FDRA field for a first cell included in the DCI is set to a specific value other than a valid FDRA value for the first cell, an index of the HARQ-ACK codebook may be indicated through a first MCS field for the first cell included in the DCI.

The HARQ-ACK codebook may be a type-3 HARQ-ACK codebook related to at least a part of the plurality of cells.

The index of the HARQ-ACK codebook may be related to at least one of cell information or HARQ process ID information for the type-3 HARQ-ACK codebook.

The BS may skip transmitting a physical downlink shared channel (PDSCH) for the first cell allocated with the specific value other than the valid FDRA value among the plurality of cells.

The BS may transmit the PDSCH based on the DCI on each of one or more cells other than the first cell among the plurality of cells.

Based on transmission of a type-3 HARQ-ACK codebook is requested to the UE through the DCI, index information related the type-3 HARQ-ACK codebook may be indicated through the first MCS field for the first cell included in the DCI.

Based on transmission of a type-3 HARQ-ACK codebook is requested to the UE through the DCI, the BS may skip transmitting a physical downlink shared channel (PDSCH) for the first cell as well as for the other cells of the plurality of cells.

The first cell may be a cell having a lowest or highest serving cell index among the plurality of cells.

The DCI may include includes a FDRA field and a MCS field for each of co-scheduled cells.

FIG. 14 illustrates a communication system 1 applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

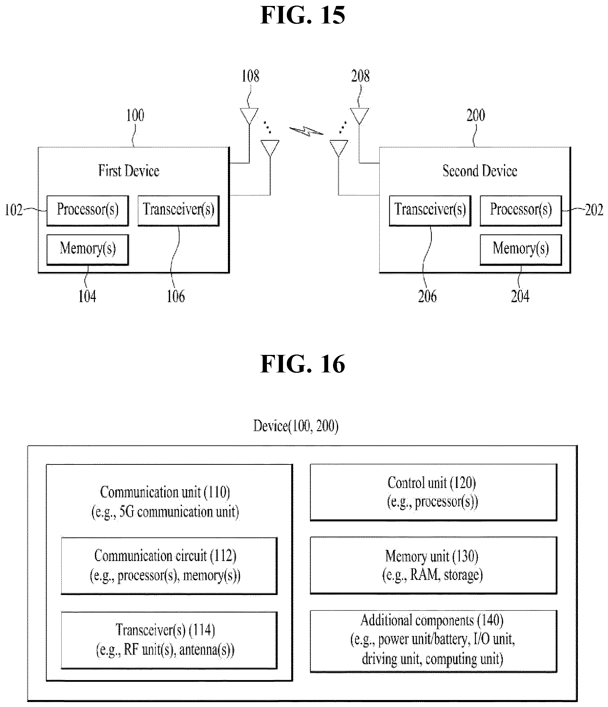

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

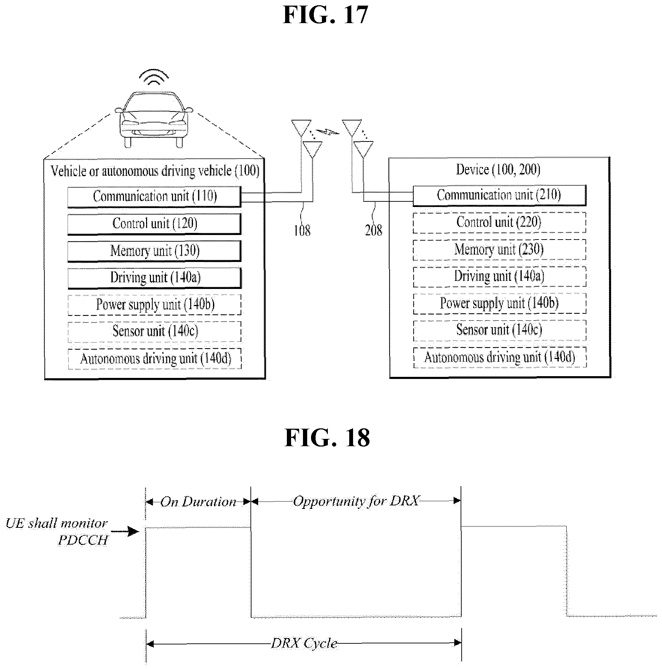

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 18 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 18, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the aforedescribed/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 7 describes a DRX operation of a UE (in the RRC_CONNECTED state). Referring to Table 7, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 7]

|  | Type of signals | UE procedure |
|---|---|---|
| 1st step | RRC signalling(MAC-Cell GroupConfig) | - Receive DRX configuration information |
| 2nd Step | MAC CE((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission
- Value of drx-HARQ-RTT-TimerDL: defines the duration of a maximum time period until a grant for a UL retransmission is received after reception of a grant for a UL initial transmission
- drx-LongCycleStartOffset: defines the duration and starting time of a DRX cycle
- drx-ShortCycle (optional): defines the duration of a short DRX cycle

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The present disclosure is applicable to UEs, BSs, or other apparatuses in a wireless mobile communication system.

**Claims**

1. A method of receiving a signal by a user equipment (UE) in a wireless communication system, the method comprising:

receiving, through a physical downlink control channel (PDCCH), downlink control information (DCI) including at least one frequency domain resource allocation (FDRA) field and at least one modulation and coding scheme (MCS) field; and
transmitting a hybrid automatic repeat request-acknowledgement (HARQ-ACK) codebook based on the DCI, wherein the DCI supports multi-cell scheduling based on a plurality of cells configured in the UE, and wherein, based on that a first FDRA field for a first cell included in the DCI is set to a specific value other than a valid FDRA value for the first cell, an index of the HARQ-ACK codebook is determined through a first MCS field for the first cell included in the DCI.

2. The method of claim 1, wherein the HARQ-ACK codebook is a type-3 HARQ-ACK codebook related to at least a part of the plurality of cells.

3. The method of claim 1, wherein the index of the HARQ-ACK codebook is related to at least one of cell information or HARQ process ID information for a type-3 HARQ-ACK codebook.

4. The method of claim 1, wherein the UE skips receiving a physical downlink shared channel (PDSCH) for the first cell allocated with the specific value other than the valid FDRA value among the plurality of cells.

5. The method of claim 4, further comprising:
receiving the PDSCH based on the DCI on each of one or more cells other than the first cell among the plurality of cells.

6. The method of claim 1, wherein, based on transmission of a type-3 HARQ-ACK codebook is requested to the UE through the DCI, index information related the type-3 HARQ-ACK codebook is determined through the first MCS field for the first cell included in the DCI.

7. The method of claim 1, wherein, based on transmission of a type-3 HARQ-ACK codebook is requested to the UE through the DCI, the UE skips receiving a physical downlink shared channel (PDSCH) for the first cell as well as for the other cells of the plurality of cells.

8. The method of claim 1, wherein the first cell is a cell having a lowest or highest serving cell index among the plurality of cells.

9. The method of claim 1, wherein the DCI includes a FDRA field and a MCS field for each of co-scheduled cells.

10. A computer-readable recording medium having recorded thereon a program to execute the method of claim 1.

11. A device for wireless communication, the device comprising:

a memory configured to store instructions; and
a processor configured to perform operations by executing the instructions,
wherein the operations of the processor comprise:

receiving, through a physical downlink control channel (PDCCH), downlink control information (DCI) including at least one frequency domain resource allocation (FDRA) field and at least one modulation and coding scheme (MCS) field; and
transmitting a hybrid automatic repeat request-acknowledgement (HARQ-ACK) codebook based on the DCI,
wherein the DCI supports multi-cell scheduling based on a plurality of cells configured for the device, and
wherein, based on that a first FDRA field for a first cell included in the DCI is set to a specific value other than a valid FDRA value for the first cell, an index of the HARQ-ACK codebook is determined through a first MCS field for the first cell included in the DCI.

12. The device of claim 11, further comprising:

a transceiver configured to transmit or receive wireless signals under control of the processor,
wherein the device is a user equipment (UE) in a wireless communication system.

13. The device of claim 11, wherein the device is an application specific integrated circuit (ASIC) or digital signal processing device configured to control a user equipment (UE).

14. A method of transmitting a signal by a base station in a wireless communication system, the method comprising:

transmitting, through a physical downlink control channel (PDCCH), downlink control information (DCI) including at least one frequency domain resource allocation (FDRA) field and at least one modulation and coding scheme (MCS) field to a user equipment (UE); and
receiving a hybrid automatic repeat request-acknowledgement (HARQ-ACK) codebook from the UE based on the DCI,
wherein the DCI supports multi-cell scheduling based on a plurality of cells configured in the UE, and
wherein, based on that a first FDRA field for a first cell included in the DCI is set to a specific value other than a valid FDRA value for the first cell, an index of the HARQ-ACK codebook is indicated through a first MCS field for the first cell included in the DCI.

15. A base station for transmitting a signal in a wireless communication system, the base station comprising:

a transceiver; and
a processor configured to control the transceiver to perform operations, the operations comprising:

transmitting, through a physical downlink control channel (PDCCH), downlink control information (DCI) including at least one frequency domain resource allocation (FDRA) field and at least one modulation and coding scheme (MCS) field to a user equipment (UE); and
receiving a hybrid automatic repeat request-acknowledgement (HARQ-ACK) codebook from the UE based on the DCI,
wherein the DCI supports multi-cell scheduling based on a plurality of cells configured in the UE, and
wherein, based on that a first FDRA field for a first cell included in the DCI is set to a specific value other than a valid FDRA value for the first cell, an index of the HARQ-ACK codebook is indicated through a first MCS field for the first cell included in the DCI.

# FIG. 1

System
Information
Reception

Initial Cell
Search

Random Access Procedure

General DL/UL Tx/Rx

S108

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101  S102  S103  S104  S105  S106  S107

• DL/UL ACK/NACK
• UE CQI/PMI/Rank Report
  using PUSCH and PUCCH

# FIG. 2

| One Frame (10ms) |

| Half-Frame (5ms) | Half-Frame (5ms) |

| Subframe 0 (1ms) | Subframe 4 (1ms) | Subframe 5 (1ms) | Subframe 9 (1ms) |

Subframe (1ms)

15KHz | Slot (14 symbols) |

1ms

30KHz | Slot 0 (14 symbols) | Slot 1 |

500us

60KHz | Slot 0 (14 symbols) | Slot 1 | Slot 2 | Slot 3 |

250us

120KHz | Slot 0 (14 symbols) | Slot 1 | Slot 2 | Slot 3 | Slot 4 | Slot 5 | Slot 6 | Slot 7 |

125us

# FIG. 3

# FIG. 4

## FIG. 5

DL assingment-to-PDSCH offset (K0)

PDCCH | PDSCH | PUCCH

slot

PDSCH-to-HARQ-ACK reporting offset (K1)

## FIG. 6

UL grant-to-PUSCH offset (K2)

PDCCH | PUSCH

## FIG. 7

Cell A
(Scheduling Cell)

CIF

Cell B
(Scheduled Cell)

CIF

Cell C
(Scheduled Cell)

CIF

CORESET
(or Search Space Set)

PDCCH

PDSCH or PUSCH

Freq.

Slot #n     Slot #n+1     Slot #n+2

Time

# FIG. 8

(a) Carrier aggregation between L-band and U-band

(b) standalone U-band(s)

# FIG. 9

Occupied　Unoccupied

| Channel Occupancy Time | | | Channel Occupancy Time | | |

Extended CCA

CCA

# FIG. 10

- Enhanced Type-3 codebook Index List

| Enhanced Type-3 codebook Index | Cells |
|---|---|
| 1 | {Cell A, Cell B, Cell C} |
| 2 | {Cell A, Cell C, Cell D, Cell E} |
| ... | ... |

- Multi-cell DCI

| DCI field | Value |
|---|---|
| ... | ... |
| 1st FDRA | Valid |
| 2nd FDRA | Invalid |
| ... | ... |
| ... | ... |
| MCS 1 | 1st value |
| MCS 2 | 2nd value |
| ... | ... |

# FIG. 11

```
┌─────────────────────────────────┐
│      Transmit HARQ-ACK(s)        │──── 1105
└─────────────────────────────────┘
                 │
                 ▼
┌─────────────────────────────────┐
│       Receive multi-cell DCI     │──── 1110
└─────────────────────────────────┘
                 │
                 ▼
┌─────────────────────────────────┐
│  Determine Slot A related to     │
│  HARQ-ACK retransmission         │──── 1115
│  based on MCS field of specific  │
│  cell                            │
└─────────────────────────────────┘
                 │
                 ▼
┌─────────────────────────────────┐
│ Retransmit transmitted HARQ-ACK  │──── 1120
│ in Slot A                        │
└─────────────────────────────────┘
```

# FIG. 12

```
┌─────────────────────────────────┐
│    Receive DCI through PDCCH      │──── 1205
└─────────────────────────────────┘
                 │
                 ▼
┌─────────────────────────────────┐
│   Transmit HARQ-ACK codebook      │──── 1210
└─────────────────────────────────┘
```

# FIG. 13

Transmit DCI through PDCCH — 1305

Receive HARQ-ACK codebook — 1310

# FIG. 14

1

100f — IoT device

Home Appliance — 100e

400 — AI Server/device

100a — Robot

150a
200
150a
150a

150a — 300 — 150a
200
Network (5G)

200

150a — 200a

150a — 200 — 150c — 200 — 150a

Hand-held device — 100d

200

XR device — 100c

Vehicle — 100b-1

150b

Vehicle — 100b-2

# FIG. 15

108    208

100    200

First Device

102— Processor(s)    Transceiver(s)

Memory(s)

104    106

Second Device

Transceiver(s)    Processor(s) —202

Memory(s)

206    204

# FIG. 16

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 17

# FIG. 18

## INTERNATIONAL SEARCH REPORT

| International application No. |
|---|
| **PCT/KR2023/005770** |

### A. CLASSIFICATION OF SUBJECT MATTER

**H04L 1/00**(2006.01)i; **H04W 72/232**(2023.01)i; **H04W 72/12**(2009.01)i; **H04L 5/00**(2006.01)i; **H04W 72/23**(2023.01)i

According to International Patent Classification (IPC) or to both national classification and IPC

### B. FIELDS SEARCHED

Minimum documentation searched (classification system followed by classification symbols)

H04L 1/00(2006.01); H04L 1/18(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDCCH(physical downlink control channel), FDRA(frequency domain resource allocation) 필드(field), MCS(modulation and coding scheme) 필드(field), DCI(downlink control information), HARQ-ACK 코드북(codebook), 다중-셀스케줄링(multi-cell scheduling), 유효한(valid), type-3 HARQ-ACK codebook

### C. DOCUMENTS CONSIDERED TO BE RELEVANT

| Category* | Citation of document, with indication, where appropriate, of the relevant passages | Relevant to claim No. |
|---|---|---|
| Y | OPPO. HARQ-ACK enhancements for Rel-17 URLLC/IIoT. R1-2200343, 3GPP TSG RAN WG1 #107bis-e, e-Meeting. 11 January 2022.<br>See sections 1 and 3-4. | 1-15 |
| Y | QUALCOMM INCORPORATED. Multi-cell PDSCH scheduling via a single DCI. R1-2101491, 3GPP TSG RAN WG1 Meeting #104-e, E-meeting. 19 January 2021.<br>See sections 2-3; and table 1. | 1-15 |
| Y | MODERATOR (NOKIA). Moderator summary #4 on HARQ-ACK feedback enhancements for NR Rel-17 URLLC/IIoT. R1-2200775, 3GPP TSGRAN WG1 Meeting #107bis-e, e-Meeting. 25 January 2022.<br>See section 2.1.4. | 8 |
| A | KR 10-2022-0043143 A (WILUS INSTITUTE OF STANDARDS AND TECHNOLOGY INC.) 05 April 2022 (2022-04-05)<br>See paragraphs [0017]-[0018]; and claims 1-6. | 1-15 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 August 2023** | **09 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| | **INTERNATIONAL SEARCH REPORT** | International application No. |
|---|---|---|
| | | **PCT/KR2023/005770** |

## C. DOCUMENTS CONSIDERED TO BE RELEVANT

| Category* | Citation of document, with indication, where appropriate, of the relevant passages | Relevant to claim No. |
|---|---|---|
| A | WO 2021-034470 A1 (QUALCOMM INCORPORATED) 25 February 2021 (2021-02-25)<br>See claims 1-15. | 1-15 |

Form PCT/ISA/210 (second sheet) (July 2022)

**INTERNATIONAL SEARCH REPORT**
Information on patent family members

| International application No. |
| --- |
| **PCT/KR2023/005770** |

| Patent document cited in search report | | | Publication date (day/month/year) | Patent family member(s) | | | Publication date (day/month/year) |
| --- | --- | --- | --- | --- | --- | --- | --- |
| KR | 10-2022-0043143 | A | 05 April 2022 | CN | 113966587 | A | 21 January 2022 |
| | | | | CN | 114424661 | A | 29 April 2022 |
| | | | | EP | 3955501 | A1 | 16 February 2022 |
| | | | | JP | 2022-529301 | A | 20 June 2022 |
| | | | | JP | 7271015 | B2 | 11 May 2023 |
| | | | | KR | 10-2021-0149875 | A | 09 December 2021 |
| | | | | KR | 10-2023-0006044 | A | 10 January 2023 |
| | | | | KR | 10-2023-0006045 | A | 10 January 2023 |
| | | | | KR | 10-2492932 | B1 | 31 January 2023 |
| | | | | TW | 202116032 | A | 16 April 2021 |
| | | | | US | 11490406 | B2 | 01 November 2022 |
| | | | | US | 11653353 | B2 | 16 May 2023 |
| | | | | US | 2022-0061077 | A1 | 24 February 2022 |
| | | | | US | 2022-0312446 | A1 | 29 September 2022 |
| | | | | US | 2022-0377776 | A1 | 24 November 2022 |
| | | | | US | 2022-0377777 | A1 | 24 November 2022 |
| | | | | WO | 2020-222624 | A1 | 05 November 2020 |
| | | | | WO | 2021-034063 | A1 | 25 February 2021 |
| WO | 2021-034470 | A1 | 25 February 2021 | CN | 114208085 | A | 18 March 2022 |
| | | | | EP | 4014384 | A1 | 22 June 2022 |
| | | | | US | 11464001 | B2 | 04 October 2022 |
| | | | | US | 2021-0051634 | A1 | 18 February 2021 |

Form PCT/ISA/210 (patent family annex) (July 2022)